**Europäisches Patentamt**

**European Patent Office**

**Office européen des brevets**

(11) Veröffentlichungsnummer: **0 134 448**

**A1**

## EUROPÄISCHE PATENTANMELDUNG

(21) Anmeldenummer: **84107393.5**

(22) Anmeldetag: **27.06.84**

(51) Int. Cl.⁴: **F 16 B 7/02**

(30) Priorität: 04.07.83 DE 3324051
18.04.84 DE 3414693

(43) Veröffentlichungstag der Anmeldung:
20.03.85 Patentblatt 85/12

(84) Benannte Vertragsstaaten:
AT BE CH DE FR LI NL SE

(71) Anmelder: Hock, Karl
Stationsweg 12
D-6969 Hardheim(DE)

(72) Erfinder: Hock, Karl
Stationsweg 12
D-6969 Hardheim(DE)

(74) Vertreter: Hach, Hans Karl, Dr.
Tarunstrasse 23
D-6950 Mosbach-Waldstadt(DE)

(54) Steckverbindung.

(57) Zum Haltern oder Abdichten eines Verbindungsgliedes an einem anderen Verbindungsglied dient ein koaxial angeordneter Konusabschnitt 3 des einen Verbindungsgliedes 1, auf dem beim Herstellen der Verbindung ein elastischer Rollring 11 rollt, der bei hergestellter Verbindung in eine Mulde 9 des Konusabschnittes eingefallen ist und in dieser Stellung die beiden Verbindungsglieder 1 und 2 stramm miteinander haltert und im Bedarfsfall auch noch eine Abdichtung bieten kann.

F.G.1

EP 0 134 448 A1

## Steckverbindung

Die Erfindung betrifft eine Steckverbindung für ineinandergesteckte Verbindungsglieder, von denen das Äußere eine kreiszylindrische Innenwand und das Innere eine kreiszylindrische Außenwand aufweist, mit einem ringförmigen Zwischenraum zwischen Innenwand und Außenwand bei koaxialer Anordnung der Verbindungsglieder und mit einem elastischen Ring, der stramm mit der Innenwand und der Außenwand verspannt in den Zwischenraum paßt und als Rollring mit kreisrundem Querschnitt ausgebildet ist.

Aufgabe der Erfindung ist es, eine Steckverbindung der eingangs genannten Art so auszugestalten, daß sie einfach ausgebildet ist, einfach zu handhaben ist und einen sicheren Halt bietet.

Die Erfindung ist dadurch gekennzeichnet,
daß die eine der Wände glatt ist,
daß die andere Wand einen Konusabschnitt aufweist, der den ringförmigen Zwischenraum gegen die Richtung zur Lösung der Verbindung verjüngt,
daß der Konusabschnitt auf seine axiale Länge verteilt ein oder mehrere koaxiale Mulden aufweist,
daß der Rollring locker in das weite Ende des ringförmigen Zwischenraums paßt und
daß der Rollring stramm die beiden Verbindungsglieder verklemmend in die am engen Ende des ringförmigen Zwischenraums gelegene Mulde paßt.

Nach der Erfindung wird der Rollring verspannt, indem er beim Ineinanderstecken der Verbindungsglieder vom weiten Ende des Zwischenraums zum engen Ende des Zwischenraums rollt bis er in eine Mulde einfällt, in der er die beiden Verbindungsglieder stramm miteinander ver--spannt. Es können dabei mehrere Mulden vorgesehen sein mit verschiedenem kleinsten Radius, von denen einer eine schwache Verspannung aber eine noch hinreichende Verbindung bietet und die nächstfolgende eine stärkere Verspannung und eine stabilere Verbindung bietet. Es kann auch eine Mulde vorgesehen sein, die keine Verspannung bietet sondern nur zur Aufbewahrung des Rollringes bei geöffneter Steckverbindung dient. Eine entsprechende Ausgestaltung ist dadurch gekennzeichnet, daß bei einem Konusabschnitt mit mehreren Mulden der kleinste Radius jeder Mulde kleiner ist als der einer zum weiten Ende des Konusabschnittes benachbart gelegenen Mulde und größer ist als der einer zum engeren Ende gelegenen benachbarten Mulde.

Auf die ineinandergesteckten Verbindungsglieder von Steckverbindungen wirken in manchen Fällen axiale Kräfte unterschiedlich auf die einzelnen Verbindungsglieder, die also das Bestreben haben, die Verbindungsglieder in axialer Richtung gegeneinander zu verschieben. In einem solchen Fall ist es wünschenswert sicherzustellen, daß durch solche axialen Kräfte die Steckverbindung nicht unbeabsichtigt gelöst werden kann. Dem trägt eine Weiterbildung Rechnung, die gekennzeichnet ist durch eine derartige Orientierung der Konusfläche, daß der Zwischenraum sich in Richtung der Resultierenden dieser Kräfte verjüngt.

Steckverbindungen nach der Erfindung können ausgestaltet sein als Durchführung, als Kupplung, als Halterung und/oder als Abdichtung.

Bei Abdichtungen ist in manchen Fällen ein die Abdichtung überbrückender Durchlaß wünschenswert, zum Beispiel damit sich beim Abdichten eines geschlossenen Gefäßes der Druck ausgleichen kann, oder als Leitung für ein Sicherheitsventil eines abgedichteten Gefäßes oder dergleichen. Eine entsprechende Ausgestaltung mit einem Durchlaß in dem mit dem Konusabschnitt ausgestatteten Verbindungsglied ist dadurch gekennzeichnet, daß ein Durchlaß in dem mit dem Konusabschnitt ausgestatteten Verbindungsglied vorgesehen ist, daß der Durchlaß im Konusabschnitt mündet und daß die Mündung bei zusammengesteckten Verbindungsgliedern auf der dem Auslaß des Durchlasses entgegengesetzten Seite der Abdichtung liegt.

Bei Steckverbindungen mit Durchlaß ist es in vielen Fällen auch wünschenswert, daß der Durchlaß in einer bestimmten Schließstellung der Verbindung abgesperrt ist. Dem trägt eine Weiterbildung der Erfindung Rechnung, die dadurch gekennzeichnet ist, daß der Durchlaß im Konusabschnitt mündet und daß die Mündung bei zusammengesteckten Verbindungsgliedern unter dem Rollring liegt und durch diesen zugesperrt ist.

Damit der Rollring bei gelöster Verbindung aufbewahrt werden kann, empfiehlt sich eine Ausgestaltung der Erfindung, die dadurch gekennzeichnet ist, daß das mit dem Konusabschnitt ausgestattete Verbindungsglied am einen Ende des Konusabschnittes eine sich quer zum Zwischenraum erstreckende Stirnfläche aufweist, daß in der Stirnfläche eine koaxiale Mulde angeordnet ist und daß die koaxiale Mulde als Aufnahme zur Aufbewahrung eines Rollrings ausgebildet ist.

Die Erfindung wird nun anhand der beigefügten Zeichnung näher erläutert.

In der Zeichnung zeigt:

Figur 1    eine Steckverbindung im Teilschnitt mit dem Konusabschnitt am äußeren Verbindungsglied,

Figur 2    eine Steckverbindung im Teilschnitt mit dem Konusabschnitt am inneren Verbindungsglied,

Figur 3    einen Jagdstock mit einer zur Höhenverstellung dienenden Steckverbindung,

Figur 4    einen selbstsperrenden Dübel,

Figur 5    die Aufhängung für eine Lampe mit zwei als Durchführung dienenden Steckverbindungen,

Figur 6    einen Kochtopf mit einer als Abdichtung dienenden Steckverbindung,

Figur 7    einen Flaschenverschluß,

Figur 8    eine Dichtmanschette mit zwei Konusabschnitten, die zu zwei Steckverbindungen gehören,

Figur 9    eine Verbindungsmuffe mit zwei Steckverbindungen,

Figur 10 bis 13    je ein Ausführungsbeispiel einer Steckverbindung zum druckdichten Abdichten eines Kanals, und

Figur 14    einen eingesteckt gelagerten Bolzen.

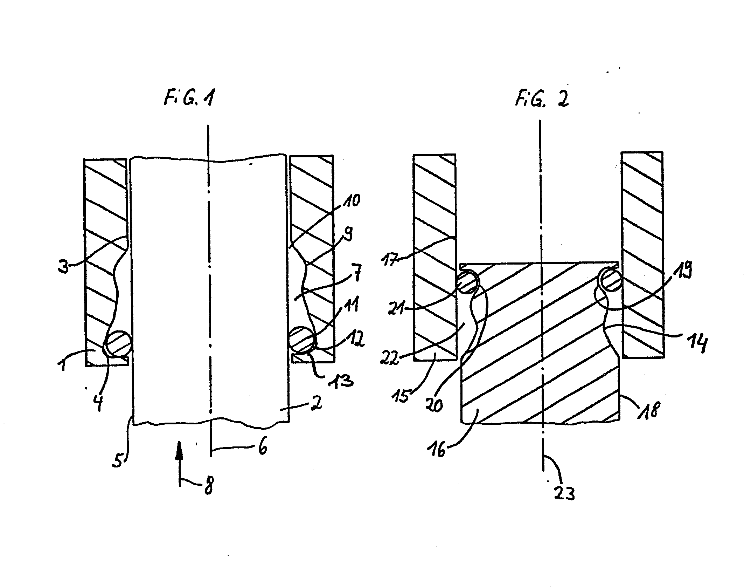

In Figur 1 ist das äußere Verbindungsglied 1 ein Rohrabschnitt und das innere Verbindungsglied 2 ein Rohr oder ein Stab. Am unten gezeichneten Ende des Verbindungsgliedes 1 ist die Innenwand 3 als Konusfläche 4 glatt ausgebildet. Die Außenwand 5 des Verbindungsgliedes ist kreiszylindrisch. Die Verbindungsglieder 1 und 2 sowie die Innenwand 3, der Konusabschnitt 4 und die Außenwand 5 sind koaxial zur Achse 6.

Der Konusabschnitt 4 ist so orientiert, daß der zwischen dem Konusabschnitt 4 und der Außenwand 5 stehengebliebene ringförmige Zwischenraum 7 sich in Richtung des Pfeils 8 verjüngt. In den Konusabschnitt 4 ist eine zur Achse 6 koaxiale Mulde 9 eingelassen, die sich in der Nähe des engen Endes 10 des Zwischenraums 7 befindet.

In den Zwischenraum 7 ist ein elastischer Rollring 11 eingesetzt, der locker - wie gezeichnet - in eine zweite, zur Achse 6 koaxiale Mulde 13 am weiten Ende 12 des Zwischenraums 7 paßt, aber in der gezeichneten Stellung mit der Innenwand 3 und dem Konusabschnitt 4 Reibungskontakt hat. Der Rollring 11 ist mit kreisrundem Querschnitt ausgebildet.

Wird zum Verschließen der Steckverbindung das innere Verbindungsglied 2 in Pfeilrichtung 8 in das äußere Verbindungsglied 1 hineingeschoben, dann rollt der Roll ring 11 den Konusabschnitt 4 entlang, bis er in die Mulde 9 einfällt, in der er zwischen dem Konusabschnitt 4 und der Außenwand 5 stramm verspannt ist. Die Verbindung ist nun hergestellt, sie hält die Teile zusammen gegen Kräfte, die in axialer Richtung mit einer Resultierenden entsprechend dem Pfeil 8 auf das innere Verbindungsglied 2 gegenüber dem äußeren Verbindungsglied 1 einwirken. Sie ist außerdem, wenn die Verbindungsglieder außen dicht ausgeführt sind, dichtend gegen flüssige oder gasförmige Medien.

Zum Öffnen der Verbindung wird das innere Verbindungsglied 2 gegenüber dem äußeren Verbindungsglied 1 gegen die Pfeilrichtung 8 herausgezogen. Dabei rollt der Rollring 11 aus der Mulde heraus wieder in die gezeichnete Stellung, in der die Verbindungsglieder auseinandergezogen werden können.

Bei diesem und den nachfolgend zu beschreibenden Ausführungsbeispielen ist der Rollring jeweils als Rollring mit kreisrundem Querschnitt und elastisch ausgebildet. Bei den nachfolgend zu beschreibenden Ausführungsbeispielen ist, soweit nicht ausdrücklich anders vermerkt, die dem Konusabschnitt gegenüberliegende Fläche des anderen Verbindungsgliedes kreiszylindrisch und glatt.

In entsprechender Weise wie bei dem Ausführungsbeispiel nach Figur 1 kann eine Rohrverbindung ausgebildet werden. In diesem Fall wird in Abänderung des dargestellten Ausführungsbeispiels anstelle des Verbindungsgliedes 2 ein Rohr als Verbindungsglied vorgesehen.

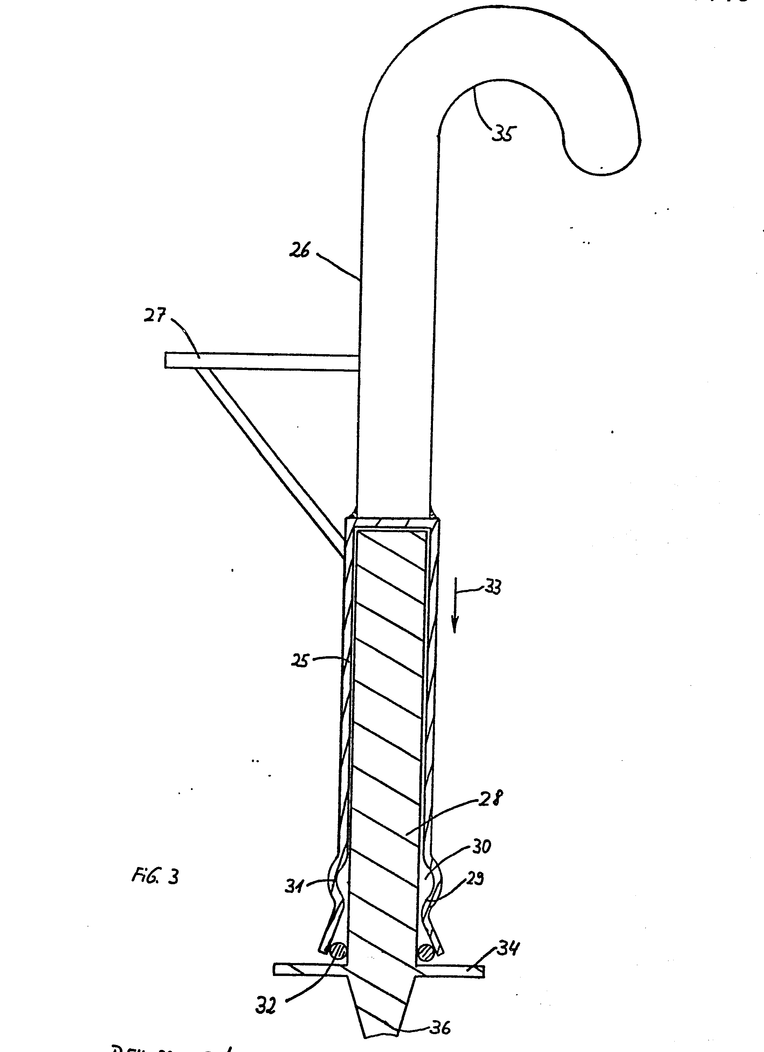

Bei dem Ausführungsbeispiel nach Figur 2 ist das äußere Verbindungsglied mit 15, das innere Verbindungsglied mit 16, die Innenwand des äußeren Verbindungsgliedes mit 17 und die Außenwand des inneren Verbindungsgliedes mit 18 und ein Konusabschnitt am inneren Verbindungsglied mit 19 bezeichnet. Am weiten Ende des Konusabschnittes 19 ist eine ringförmige Mulde 20 eingelassen und mit 21 ist ein elastischer Rollring bezeichnet, der in der gezeichneten, geöffneten Stellung lose in den Zwischenraum 22 paßt. Die genannten Teile sind koaxial zu Achse 23 ausgebildet. Bei geschlossener Verbindung sitzt der Rollring 21 in der Mulde 14 und verspannt stramm die beiden Verbindungsglieder miteinander, entsprechend wie im Text zu Figur 1 beschrieben.

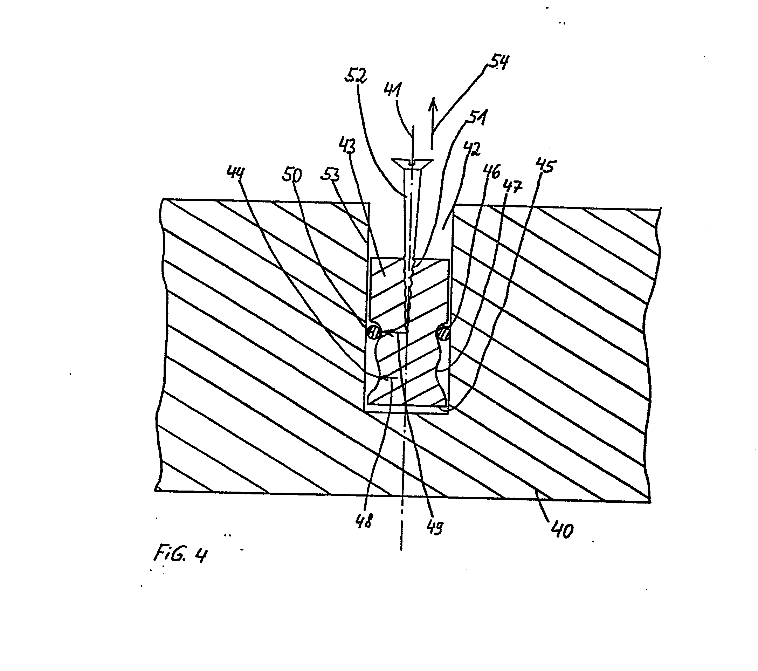

Gemäß Figur 3 ist das äußere Verbindungsglied 25 ein Rohrstück am unteren Ende 26 des Oberteils eines Sitzstockes, dessen Sitz mit 27 und dessen Handgriff mit 35 bezeichnet ist. Das zweite Verbindungsglied 28 ist das Unterteil des Sitzstockes und in das Verbindungsglied 25 einschiebbar. Am freien unteren Ende des ersten Verbindungsgliedes 25 ist innen ein Konusabschnitt 29 vorgesehen, der einen sich keilförmig nach oben verjüngenden ringförmigen Zwischenraum 30 begrenzt. An der Konusfläche 29 ist am oberen Ende eine Mulde 31 angeordnet und es ist ein Rollring 32 vorgesehen, der durch Belastung des Oberteils in Pfeilrichtung 33 in die Mulde 31 getrieben wird und dort die Verbindungsglieder 25 und 28 stramm miteinander verspannt.

Man kann die Länge des Stockes verstellen, indem man bei gelöster Verbindung den Rollring 32 in seiner Höhe auf dem Verbindungsglied 28 verstellt. Mit 36 ist eine Einsteckspitze zum Einstecken des Sitzstockes in den Boden und mit 34 ein Stützteller bezeichnet.

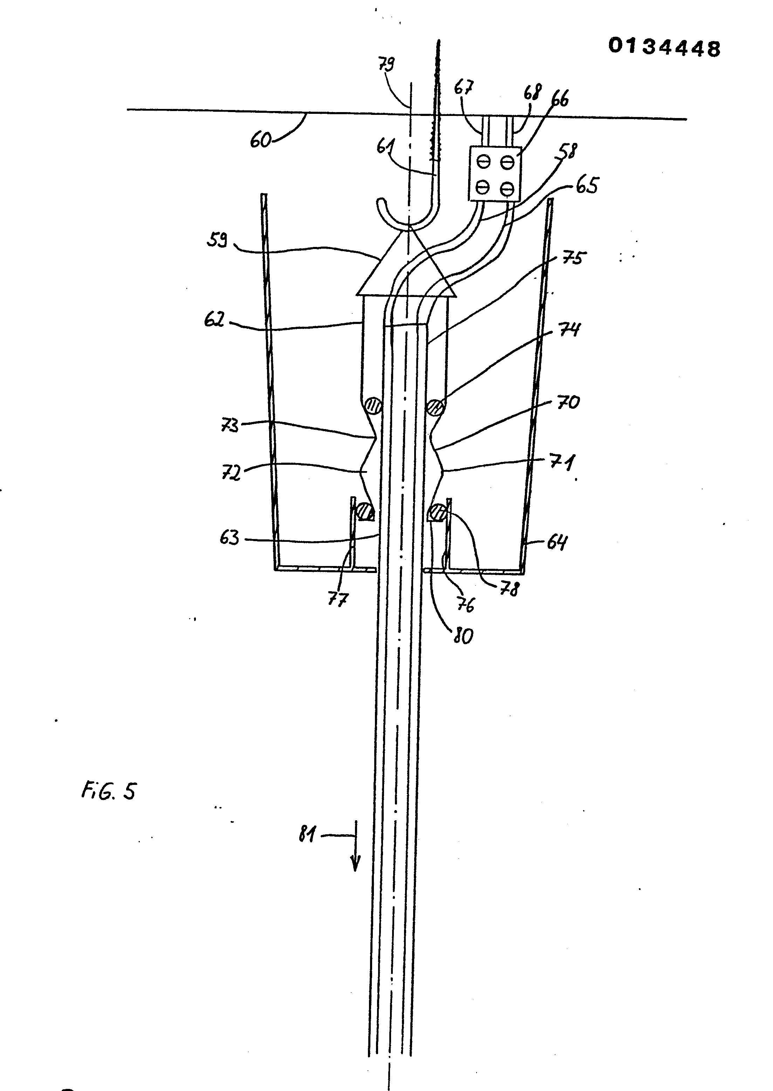

Gemäß Figur 4 ist mit 40 ein Mauerabschnitt bezeichnet, in den ein kreiszylindrisches, zur Achse 41 koaxiales Sackloch 42 eingelassen ist. In diesem Sackloch steckt lose passend ein Dübel 43, der an seinem einsteckseitigen Ende außen einen Konusabschnitt 44 aufweist, der koaxial zur Achse 41 ist, sich zum freien unteren Ende 45 des Dübels verjüngt und zwei koaxiale Mulden 46, 47 aufweist. Der Radius 48 der Mulde 47, die dem freien Ende 45 näher liegt, ist größer als der Radius 49 der Mulde 46. In der Mulde sitzt ein elastischer Rollring 50, der mit Spiel in das Sackloch 42 paßt. Wird in den Dübel in ein vorzugsweise vorgebohrtes koaxiales Loch 51 eine Schraube 52 eingeschraubt, dann wird der Dübel gespreizt und der Rollring 50 gegen die kreiszylindrische Innenwand 53 des Sackloches gepreßt. Wird Zug in Richtung des Pfeils 54 auf den Dübel 43 ausgeübt und die sperrende Kraft des verspannten Rollringes 50 überwunden, dann rollt der Rollring 50 in die Mulde 44 und wird dort noch stärker verspannt, so daß sich die Verbindung des Dübels mit der Innenwand 53 des Sackloches 42 dadurch festzieht und eine sichere Halterung bietet.

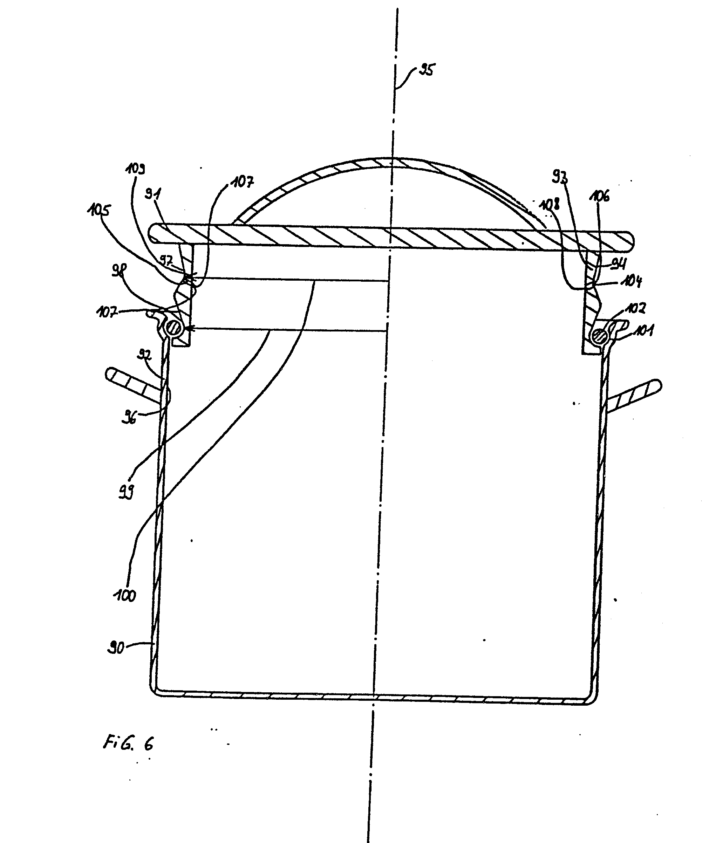

Figur 5 zeigt einen in eine Decke 60 eingeschraubten Haken 61, an dem ein Bügel 59 eingehängt ist, der eine Hülse 62 trägt. In der Hülse 62 steckt das obere Ende eines Lampenkabels 63 zum elektrischen Anschluß und zum Aufhängen einer nicht dargestellten Deckenlampe. Die elektrischen Leitungen 58, 65 des Lampenkabels sind am oberen Ende aus diesem herausgeführt und über eine Lüsterklemme 66 mit Kabelenden 67, 68 verbunden, deren Kabel in der Decke 60 verlegt sind. Über die Hülse 62 und das Lampenkabel 63 ist ein Baldachin 64 gestülpt, der topfförmig und oben offen ist und dazu dient, den Haken 61 und die Lüsterklemme 66 nach außen abzudecken.

Die Hülse 62 weist einen inneren Konusabschnitt 70 auf, der sich nach unten verjüngt, und einen äußeren Konusabschnitt 71, der sich ebenfalls nach unten verjüngt. Der innere Konusabschnitt 70 weist eine Mulde 72 und der äußere Konusabschnitt 71 eine Mulde 73 auf. Der innere Konusfabschnitt 70 bildet mit einem elastischen Rollring 74 und der Außenwand 75 des Kabels eine erste Steckverbindung. Der äußere Konusabschnitt 71 bildet mit der Innenwand 76 eines kreiszylindrischen Stutzens 77 des Baldachins 64 und einem elastischen Rollring 78 eine zweite Steckverbindung. Die an den beiden Steckverbindungen beteiligten Teile sind koaxial zur Achse 79.

Kurz vor Vollendung der Montage befinden sich die Teile in der dargestellten Stellung, in der beide Steckverbindungen gelöst sind. Der Rollring 78 liegt dabei auf einer Schulter 80, die die Bewegung des Rollringes 78 nach unten begrenzt.

Um das Lampenkabel fest zu haltern wird in Pfeilrichtung 81 nach unten gezogen, wodurch der Rollring 74 in die Mulde 72 getrieben wird, in der er das Lampenkabel mit der Hülse 62 stramm sitzend verbindet. Anschließend wird der Baldachin 64 bei festgehaltenem Lampenkabel nach oben geschoben, wodurch der Rollring 78 in die Mulde 73 getrieben wird, in der er den Baldachin in der oberen Stellung hält. In dieser oberen Stellung soll der Baldachin an der Decke 60 anstossen, ein entsprechender Höhenausgleich ist durch die flache Ausgestaltung der Mulde 73 gewährleistet. Die beiden Steckverbindungen dienen hier als Durchführung für das Lampenkabel 63 und als Halterung für das Lampenkabel und den Baldachin.

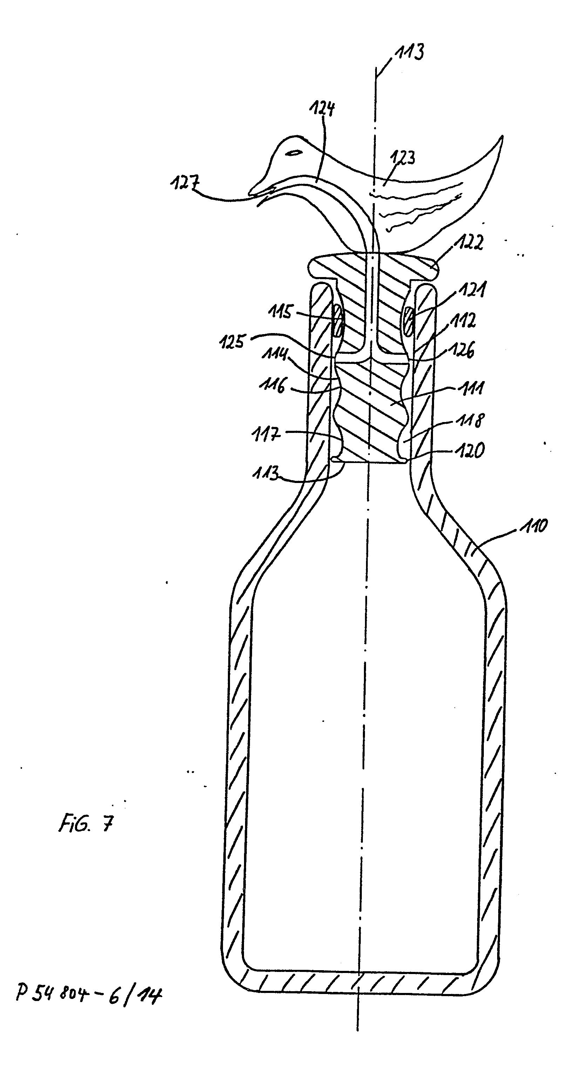

Figur 6 zeigt einen Topf 90, der durch einen Deckel 91 verschließbar ist. Der obere Rand des Topfes ist das eine Verbindungsglied 92 und ein in das erste Verbindungsglied passender unterer Ansatz des Deckels 91 ist das zweite Verbindungsglied 93. Die Innenwand 96 ist kreiszylindrisch zur Achse 95 und glatt. Im Deckel 91 ist ein Konusabschnitt 94 vorgesehen, der sich zum freien Ende, also in der Zeichnung nach unten, verjüngt und zwei ringförmige Mulden 97, 98 aufweist. Der kleinste Radius 99 der Mulde 98, die am engeren Ende des Konus liegt, ist kleiner als der kleinste Radius 100 der anderen Mulde 97.

Am oberen Rand des Topfes 90 ist noch eine Mulde 101 vorgesehen. In der Mulde 98 liegt ein elastischer Rollring 102. Der Rollring 102 sitzt stramm in der Mulde 98 und findet in der Mulde 101 locker Platz. Wenn der Deckel 91 in den Topf gedrückt wird, gewinnt der Rollring 102 Reibungskontakt mit der Innenwand 96 und wird schließlich in die Mulde 97 getrieben, in der er stramm den Deckel mit dem Topf verbindet und gleichzeitig eine Abdichtung bietet.

Mit 104 und 105 sind zwei einander diametral gegenüberliegende Durchlässe bezeichnet, die jeweils im Grund der Mulde 97 münden. Die Mündungen sind mit 106 und 109 bezeichnet. Die Auslässe 107, 108 der Durchlässe führen in das
Innere des Topfes. Durch die Durchlässe wird bei schließendem Deckel ein Druckausgleich ermöglicht. Die Durchlässe
werden abgesperrt bei verschlossenem Deckel durch den
Dichtring 102, der dann stramm auf den Mündungen 106 und
109 sitzt und diese verschließt. Bei dem Topf 90 kann es
sich auch um ein Einmachgefäß handeln.

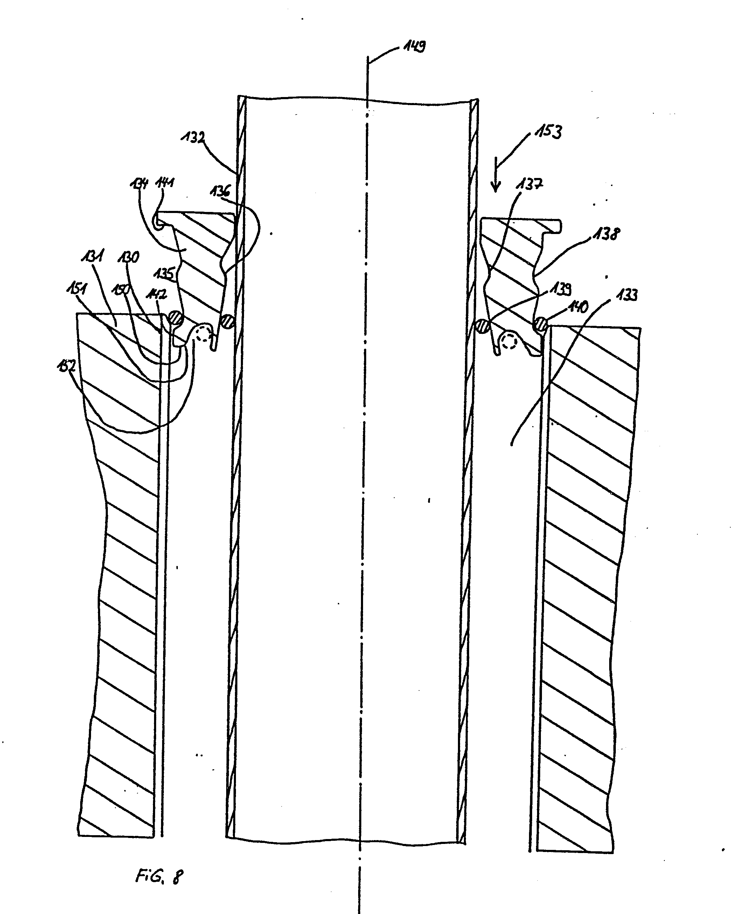

Figur 7 zeigt eine Flasche 110, die durch einen Stopfen
111 verschlossen ist. Die Innenwand 112 des Flaschenhalses
ist kreiszylindrisch zur Achse 113. Der Stopfen 111 weist
einen sich nach unten, also zum einsteckseitigen Ende 113,
verjüngenden Konusabschnitt 114 auf, der drei koaxiale
Mulden 115, 116, 117 aufweist. Der kleinste Radius der
Mulde 117 ist am kleinsten, der der Mulde 116 etwas größer
und der der Mulde 115 am größten. Der Stopfen 111 weist an
seinem einsteckseitigen Ende eine Schulter 120 auf, über
die ein über den Stopfen gestülpter elastischer Rollring
121 entspannt nicht paßt. Oben am Stopfen 111 ist eine
Schulter 122 vorgesehen, die nicht in den Flaschenhals
paßt.

Der Rollring 121 hat entspannt kreisrunden Querschnitt,
ist aber im gezeichneten, gespannten Zustand im Querschnitt elliptisch deformiert. In der gezeichneten
Stellung liegt er in der weitesten Mulde 115 und verspannt
den Stopfen im Flaschenhals und bietet auch gleichzeitig
eine Abdichtung. Oben auf dem Stopfen sitzt eine Zierfigur
123, in der ein Durchlaß 124 angeordnet ist, dessen
Mündungen 125, 126 in der Konusfläche zwischen den beiden
Mulden 115 und 116 liegen. Der Auslaß 127 des Durchlasses
124 liegt in der Zierfigur 123. Der Durchlaß 124 bietet
eine die Abdichtung durch den Rollring 121 überbrückende
Leitung. Diese Leitung ist zu Entlüftungszwecken als Doppelleitung ausgebildet, die in der Zeichnung der Übersicht halber nicht dargestellt ist. Durch diese Leitung kann in einem kleinen Rinnsal Flüssigkeit aus dem Flascheninhalt ausgegossen werden. Man kann den Durchlaß 124 absperren, indem man den Stopfen 111 ein kleines Stück herauszieht, so daß der Rollring 121 in der Mulde 116 verspannt ist. Dann ist der Stopfen schwächer aber auch noch sicher gehaltert und es ist auch noch hinreichende Abdichtung gewährleistet, die Mündungen 125, 126 liegen aber nun außerhalb des Flascheninneren. In der Mulde 117 paßt der Rollring 121 locker in den Zwischenraum 118. In Abänderung des in Figur 7 dargestellten Ausführungsbeispiels kann ein Stopfen für eine Thermosflasche oder eine Kaffeeflasche ausgebildet sein, indem man bei dem Stopfen 111 den Durchlaß 124 nicht vorsieht.

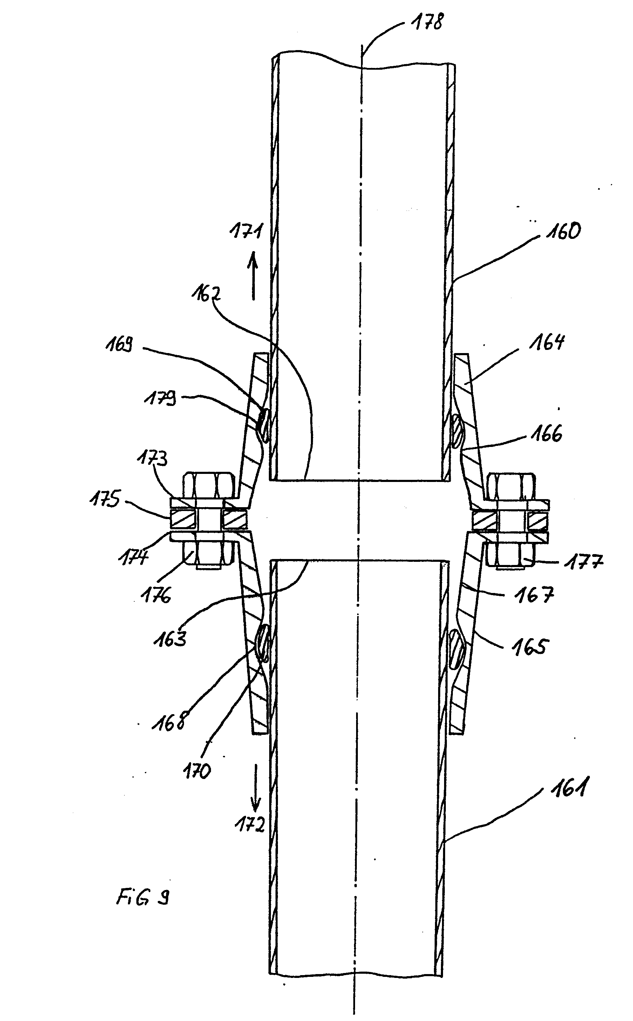

Figur 8 zeigt ein äußeres Mantelrohr 130, das zum Beispiel von Mauerwerk 131 umgeben sein kann. In diesem Mantelrohr steckt ein engeres Innenrohr 132. In dem Zwischenraum 133 zwischen den beiden Rohren steckt eine ringförmige Manschette 134, deren Innen- und Außenfläche je als Konusabschnitt 135, 136 ausgebildet ist. Mit 137 und 138 ist je eine Mulde und mit 139 und 140 je ein elastischer Rollring bezeichnet. An beiden Enden der Konusfläche 135 ist eine Begrenzungsschulter 141, 142 vorgesehen. Die genannten Teile sind koaxial zur Achse 149.

Im gezeichneten, gelockerten Zustand sitzt der Rollring 139 stramm auf dem Innenrohr 132 und der Rollring 140 stramm am unteren Ende der Konusfläche 135, angelehnt an die Begrenzungsschulter 142.

Am unten gezeichneten, einsteckseitigen Ende 150 der Manschette 134 ist eine Stirnfläche 151 vorgesehen, die sich quer zur Achse 149 erstreckt und eine ringförmige Mulde 152 aufweist, in der der Rollring 139 eingesetzt werden kann, um ihn bei der Lagerhalterung der Einzelteile dort aufzubewahren.

In der gezeichneten Stellung der Teile sind die beiden Steckverbindungen, die durch die Rollringe 139, 140 gebildet sind, bereit zur Verbindung. Zum Festsetzen der Verbindung wird die Manschette 134 in Pfeilrichtung 153 in den Zwischenraum 133 getrieben. Dabei rollen die Rollringe 139 und 140 in die Mulden 137, 138 und bieten die gewünschte Verbindung bei gleichzeitiger Abdichtung. Eine entsprechende Manschette kann auch in das gegenüberliegende, in der Zeichnung unten gezeichnete Ende des Zwischenraums 133 eingetrieben werden.

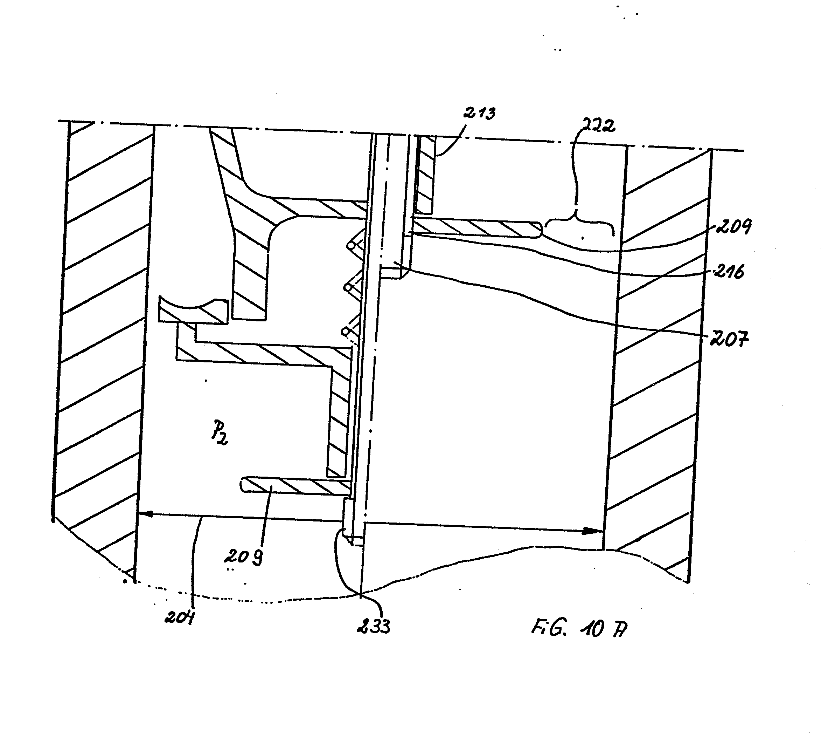

Gemäß Figur 9 sind mit 160, 161 zwei Rohre bezeichnet, auf deren einander zugekehrte Enden 162, 163 je eine Manschette 164, 165 aufgesteckt ist. Die beiden Manschetten weisen innen Konusabschnitte 166, 167 auf, die sich zum freien Ende 162, 163 verjüngen und je eine Mulde 179, 168 aufweisen, in der in der gezeichneten, verspannten Stellung je ein elastischer Rollring 169, 170 verspannt und dadurch elliptisch deformiert ist. Die beiden Manschetten können gelöst werden, indem die Manschette 164 in Pfeilrichtung 171 und die Manschette 165 in Pfeilrichtung 172 auf das Rohr 160 beziehungsweise 161 geschoben werden. Beide Manschetten weisen je einen Flanschring 173, 174 auf und sind mit ihren Flanschringen unter Zwischenlage einer Dichtscheibe 175 mit auf den Umfang verteilt angeordneten Schrauben 176, 177 verschraubt. Die genannten Teile sind koaxial zur Achse 178. Die beiden Steckverbindungen wirken als Halterung und als Abdichtung und gestatten es, zwei glatte Rohre oder in Abänderung auch zwei glatte Stangen miteinander nach Art einer Flanschverbindung zu verbinden. In Anlehnung an Figur 9 kann auch eine Verbindung für elektrische Kabel ausgebildet sein. Dann werden anstelle der Rohre 160, 161 zwei elektrische Kabel vorgesehen und statt der Manschetten 164, 165 sind Kabelmuffen vorgesehen, die im wesentlichen genauso ausgebildet sind wie die Manschetten und auch in der gleichen Weise wie in Figur 9 dargestellt miteinander verbunden werden können.

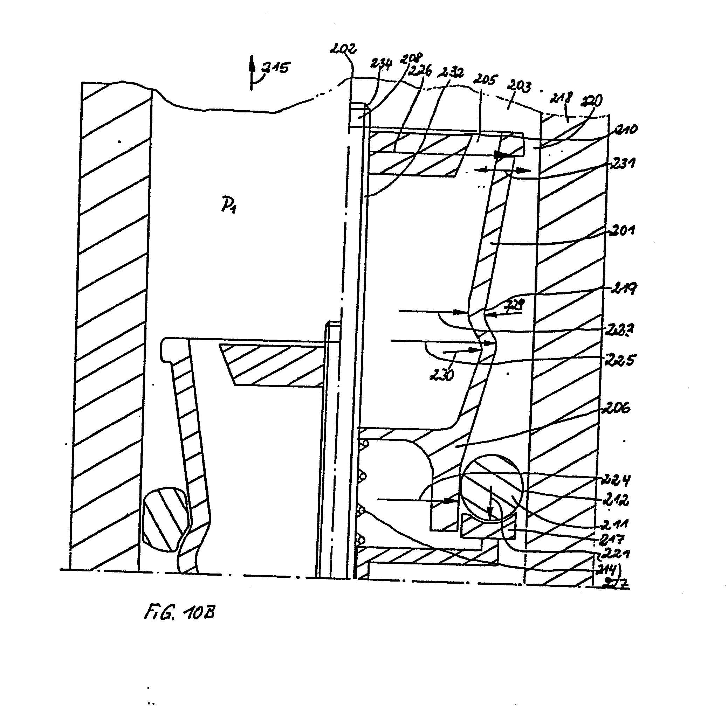

Bei den nachfolgenden, anhand der Figuren 10 bis 13 zu beschreibenden Ausführungsbeispielen handelt es sich um Vorrichtungen zum druckdichten Abdichten eines Kanals auf einem Kanalabschnitt, der konstanten, kreisrunden Innenquerschnitt hat, mit einem zylindersymmetrischen, in den Kanalabschnitt mit Spiel koaxial passenden Konusabschnitt, der mit einem über das enge Konusende passend aufgezogenen, gummielastischen Rollring, der kreisrunden Querschnitt hat, mit Spiel in den Kanalabschnitt paßt, mit seinem weiten Konusende gegen den Überdruck gerichtet in den Kanalabschnitt eingesteckt wird und bei der dann, durch Vorrollen des Rollringes auf einen weiteren Konusabschnitt dieser dichtend zwischen Konusabschnitt und Kanalwandung verspannt wird.

Vorrichtungen dieser Art werden besonders auf Baustellen benötigt, um verlegte Abwasserkanäle auf Dichtigkeit zu überprüfen. Die dargestellten Ausführungsbeispiele sind einfach ausgebildet, einfach zu handhaben und bei Verschmutzung leicht zu reinigen.

Gemäß Figur 10 ist mit 201 ein zur Achse 202 zylindersymmetrischer Konus bezeichnet, der mit Spiel in den zur Achse 202 koaxialen Kanalabschnitt 203 paßt. Der Kanalabschnitt 203 hat auf seiner ganzen Länge kreisrunden, gleichbleibenden Innenquerschnitt gemäß Doppelpfeil 204. Der Konus 201 dient dazu, den Kanalabschnitt 203 abzudichten, wobei im Abdichtungszustand der Druck P1 gegenüber dem weiteren Konusende 205 höher ist als der Druck P2 gegegenüber dem engeren Konusende 206. Beim Einsetzen des Konus 201 sind die Drücke P1 und P2 gleich. Der nur eingesetzte Konus 201 ist rechts gezeichnet, links ist der Konus im abgedichteten Zustand gezeichnet.

Der Konus 201 ist ein druckdicht ausgeführter Topf mit einem axial befestigten Rohr 232, an dessen freien Enden 207, 208 je ein Handgriff 209, 210 und je ein Außengewinde 233, 234 zum Aufschrauben eines Abdichthahns oder einer anderen Armatur angebracht ist. Auf das enge Ende 206 des Konus 201 ist ein gummielastischer, gerade passender als Dichtring wirkender Rollring 211 gesteckt, der in diesem Zustand mit Toleranz 212 in den Kanalabschnitt 203 paßt. Auf das freie Ende 207 ist ein Dichtringschieber 213 gesteckt, der gegen die Kraftwirkung einer Druckfeder 214, die sich auf dem Dichtringschieber 213 einerseits und auf dem Konus 201 andererseits abstützt, in axialer Richtung gemäß Pfeil 215 durch Drehen des Handgriffs 209 auf einem Gewinde 216 verschoben werden kann. Er lastet dabei mit einer ringförmigen Manschette 217 auf dem Rollring 211 und verschiebt diesen in Pfeilrichtung 215 auf einen weiteren Konusabschnitt, so daß der Dichtring 211 sich spreizt und unter Fortfall des Toleranzabstandes 212 in Berührungskontakt mit der Kanalwandung 218 gerät. Ist das geschehen, dann ist der Konus 201 bereit zum Verspannen. Er wird zu diesem Zweck gegen die Pfeilrichtung 215 mittels des Handgriffs 209 von Hand gezogen oder mit dem Handgriff 210 geschoben in die in Figur 10 links gezeichnete Position, in der der Dichtring 211 beim Zurückweichen des Konus auf der ansteigenden Konusfläche zum weiten Konusende 205 hin gerollt ist, bis er in eine vorgesehene ringförmige Konusstufe 219 eingefallen ist, wie in Figur 10 links gezeichnet.

In dieser Situation kann der Konus 201 losgelassen werden, der Dichtring 211 sitzt verspannt in der Konusstufe 219 und der Konus kann nicht in Pfeilrichtung 215 ausweichen. Wenn jetzt aufgrund der Druckdifferenz der Überdruck P1 - P2 besonders stark wird, kann der Konus durch diesen

Überdruck noch weiter gegen die Pfeilrichtung 15 verschoben werden, wodurch der Rollring 211 noch weiter die ansteigende Konusfläche entlangrollt und sich zunehmend verspannt und seine Dichtfunktion verstärkt wird. Bei abnehmender Druckdifferenz weicht die Vorrichtung wieder in die in Figur 10 links gezeichnete Stellung zurück.

Wenn die Druckdifferenz nicht mehr vorhanden ist, kann der Konus 201 herausgenommen werden. Er wird dazu von Hand unter Überwindung der Stufe 219 in Pfeilrichtung 215 verschoben und der Toleranzspalt 212 wird wieder hergestellt durch Zurückschrauben des Handgriffs 209, wodurch der Dichtringschieber 213 unter der Wirkung der Druckfeder 214 zurückweichen kann. Die Teile befinden sich nun wieder in dem in Figur 10 rechts gezeichneten Zustand, in dem die ganze Vorrichtung bequem aus dem Kanalabschnitt 203 herausgenommen werden kann, weil alle Teile Toleranzabstand 212, 220, 221, 222, 231 zur Kanalwandund 218 haben. Der Toleranzabstand 222, 231 der Handgriffe 209, 210 ist zweckmäßig ein großer Sicherheitsabstand wie gezeichnet.

Der kleinste Konusradius 223 im Bereich der Konusstufe 219 ist größer als der Konusradius 224 am engen Konusende 206. Der größte Konusradius 225 im Bereich der Konusstufe 219 ist kleiner als der Konusradius 226 am weiten Konusende 205. Die Konusstufe 219 ist, bezogen auf den Querschnitt, S-förmig gekrümmt mit einem Krümmungsradius 229, 230 größer als 1/3 des Querschnittsradius 227 des entspannten Rollrings. Die radiale Höhe der Konusstufe 219, das ist

0134448

die Differenz zwischen dem Radius 225 und dem Radius 223, ist zweckmäßig 1/12 bis 1/4, vorzugsweise 1/8, des Querschnittsradius 227 des entspannten Rollrings 211.

Der Konus kann aus Ton, Keramik, Kunststoff, Hartholz, Glas oder Metall bestehen. Vorzugsweise besteht er aus Metall oder Kunststoff.

Der abgesperrte oder abzusperrende Kanal kann über die Leitung des Rohrs 232 mit Druckmedium gefüllt oder auch wieder entlastet werden.

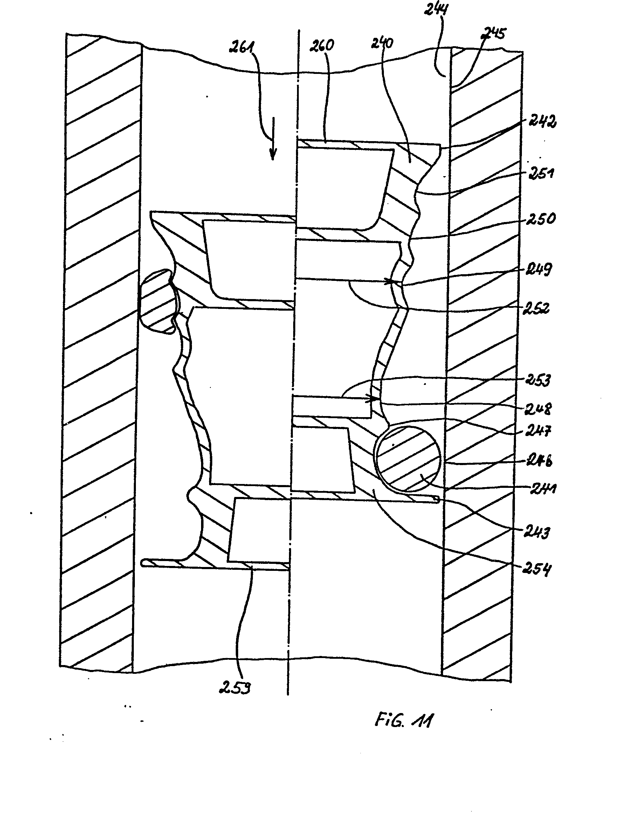

Bei dem in Figur 11 dargestellten Ausführungsbeispiel ist der Konus mit 240 und der im Ausgangszustand lose aufgespannte als Dichtring wirkende Rollring mit 241 bezeichnet. Der Konus 240 paßt mit Toleranz 242, 243 in den abzudichtenden Kanalabschnitt 244. Zwischen dem Rollring 241 und der Kanalwandung 245 besteht ebenfalls Toleranzabstand 246. Der Konus 240 weist insgesamt fünf ringförmige Konusstufen 247 bis 251 auf. Der kleinste Radius einer jeden Konusstufe, zum Beispiel der Radius 252 der Konusstufe 249, ist größer als der kleinste Radius 253 der zum engeren Konusende 254 nächstgelegenen Konusstufe 248.

An beiden Konusenden sind Handgriffe 259, 260 vorgesehen, mit denen der Konus 240 durch Verschieben in Richtung des Pfeils 261 in eine Spannstellung gebracht wird. Dabei wird der Rollring 241 von Hand in die Konusstufe 248 verschoben, in der er dichtend an der Kanalwandung 245 anliegt. Durch Druckbelastung in Richtung des Pfeils 261 kann der Konus weiter verschoben werden, so daß der Rollring 241, wie in Figur 11 links gezeichnet, auf eine höhere Stufe verschoben und dort verspannt fixiert wird, bis er nach Druckentlastung durch Verschieben des Konus gegen die Pfeilrichtung 261 wieder entspannt in die Konusstufe 247 gelangt.

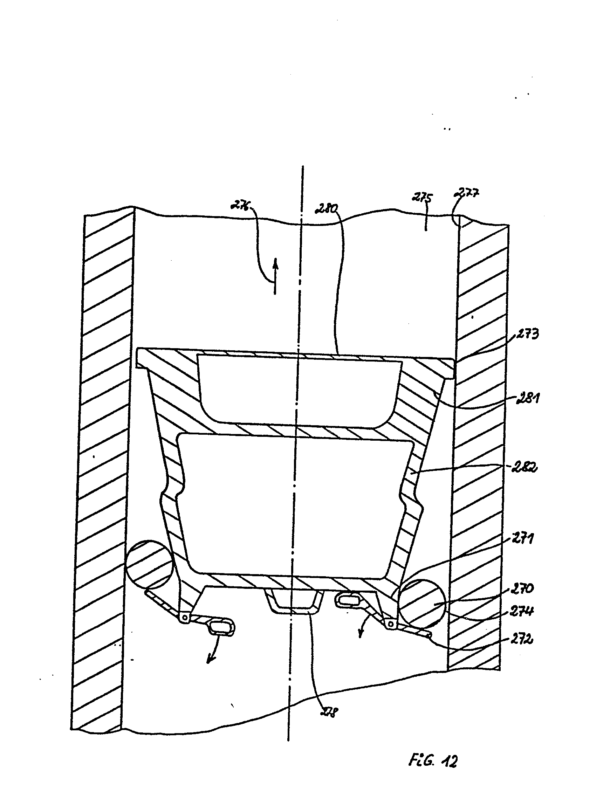

Bei dem Ausführungsbeispiel nach Figur 12 liegt der als Dichtring wirkende Rollring 270 im Ausgangszustand über dem engen Konusende 271 an Handhaben 272, die auf den Umfang verteilt angeordnet und schwenkbar sind. Im Zustand wie in Figur 12 rechts gezeichnet paßt der Konus und der Rollring mit Toleranz 273, 274 in den Kanalabschnitt 275. Der Toleranzspalt 274 wird überwunden, indem mittels der Handhaben 272 der Rollring 270 ein kleines Stück in Pfeilrichtung 276 verschoben wird, bis er in Kontakt mit der Kanalwandung 277 gerät. Ist das geschehen, dann wird der Konus mittels des Handgriffs 278 gegen die Pfeilrichtung 276 verschoben, bis der Rollring 270 in die Konusstufe 279 einfällt. Mit 280 ist ein zweiter Handgriff am weiten Konusende 281 des Konus 282 bezeichnet.

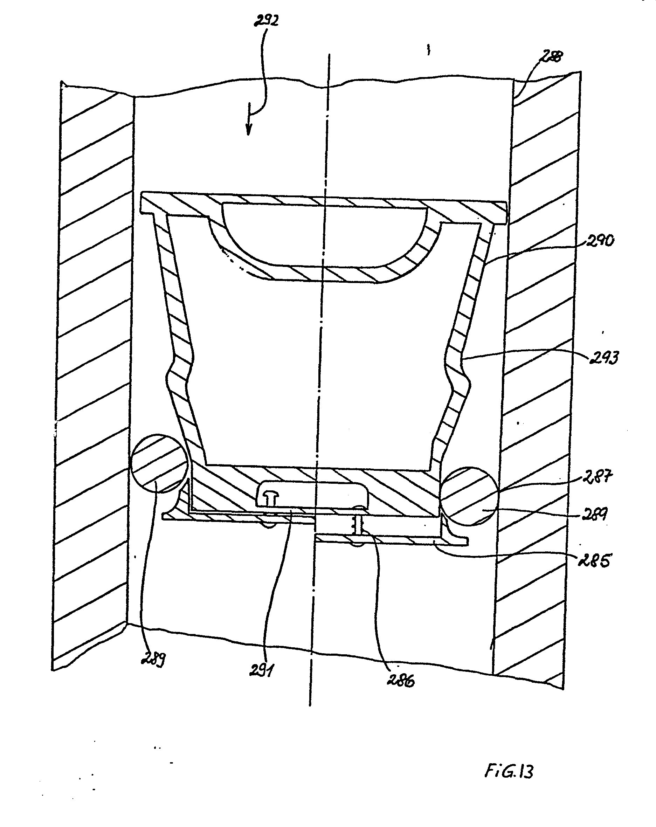

Bei dem in Figur 13 dargestellten Ausführungsbeispiel wird die Funktion der Handhaben 272 übernommen von einem Dichtringschieber 285, der aus der in Figur 13 rechts gezeichneten Stellung von Hand gegen die Kraftwirkung von Rückstellfedern 286 in die in Figur 13 links gezeichnete Stellung verstellt werden kann. Dabei verschiebt er den zunächst nur lose und mit Toleranz 287 zur Kanalwandung 288 aufgesetzten Rollring 289 auf einen weiteren Abschnitt des Konus 290, auf dem der Rollring 289, wie in Figur 13 links gezeichnet, in Berührungskontakt mit der Kanalwandung 288 gerät. Ist das geschehen, dann kann der Konus 290 an dem Handgriff 291 in Pfeilrichtung 292 verschoben werden, bis der Rollring 289 in die Konusstufe 293 einfällt und stramm verspannt ist.

Diejenigen Teile der Funktionen und Ausführungsmerkmale der Ausführungsbeispiele aus den Figuren 11 bis 13, die im einzelnen im Text zu den Figuren 11 bis 13 nicht beschrie-ben sind, sind entsprechend ausgeführt wie im Text zu Figur 10 beschrieben.

Die Abdichtvorrichtungen sind geeignet, gegen Überdruck und gegen Unterdruck abzudichten. Damit sie bequem von beiden Seiten bedient werden können, sind von beiden Seiten Handgriffe 209, 210; 278, 280 vorgesehen.

Die Abdichtvorrichtungen dienen vorzugsweise zum Abdichten von Abwasserkanälen mit einem Kanaldurchmesser 204 von 8 - 1.500 cm (Zentimeter) und sind in ihrer Größe dann dementsprechend bemessen. Sie sind aber auch bei wesentlich größeren und auch bei kleineren Durchmessern und auch für andere Anwendungszwecke, zum Beispiel Wasserleitungen, Gasleitungen und dergleichen anwendbar.

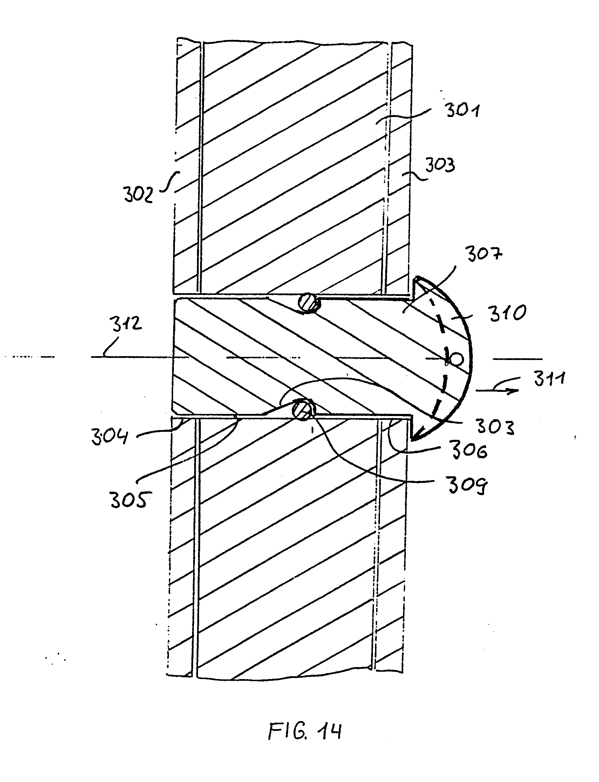

In Figur 14 ist mit 301, 302 und 303 je eine Scheibe bezeichnet. Die Scheiben haben gleichgroße, kreisrunde Löcher 304, 305, 306 und sind mit ihren Löchern koaxial zueinander angeordnet. Durch die Löcher ist ein passender Bolzen 307 gesteckt. Der Bolzen weist eine äußere Ringnut 308 auf, in der ein elastischer Dichtring 309 liegt. Die Ringnut wird, bezogen auf den Querschnitt, in Richtung weiter weg vom Bolzenkopf flacher. Die Folge ist, daß, wenn der Bolzen in Pfeilrichtung 311 druckbelastet wird, sich der Dichtring in einem flacheren Teil der Ringnut verspannt und damit den Bolzen zusätzlich sichert. Um den Bolzen herauszunehmen wird er, während sich der Dichtring im tiefsten Teil der Ringnut befindet, um die Bolzenachse 312 gedreht und dabei langsam in Pfeilrichtung 311 herausgezogen.

Die Erfindung ist nicht auf die dargestellten Ausführungsbeispiele beschränkt. Sie ist zum Beispiel außerdem anwendbar für eine wasserdichte Kabelsteckerverbindung, für eine Kappe zum Abdichten einer Antennendurchführung, für wasserdichte Stopfen zum Abdichten von Abstandsrohren, die bei Betonguß verwendet werden, zum Haltern von Arbeitsgeräten, wie Rechen oder Besen an einem Stiel, zum Haltern des Fußes eines Blumentopfes in einem Umtopf mit Abstand, zum Haltern von Bordträgern an einer vertikalen Tragstange für ein Gestell, bei der die Bordträger entsprechend dem Ausführungsbeispiel nach Figur 3 auf unterschiedlicher Höhe fixiert werden können, zum Haltern anders ausgestalteter Möbelteile justierbar gegeneinander, zum Haltern von Gehäusen elektrischer Geräte, zum Beispiel Ventilatorgehäuse in einem Lagerrohr, zum Haltern einer Lampenkuppel an einem Grundelement, an dem die Birnenfassung befestigt ist und zum Haltern des Steckers einer elektrischen Kupplung in der zugehörigen elektrischen Kupplung.

In Ergänzung der dargestellten Ausführungsbeispiele kann man auch noch Riegel, Haken oder dergleichen bewegliche Halterungselemente vorsehen, die von außen zugänglich sind und es gestatten, die beiden Verbindungsteile miteinander zu verriegeln.

Man kann auch einen Ausfüller für einen kreisrunden Durchbruch einer Möbelwandung oder einer anderen Wandung als Verbindungsglied ausführen und in dem Durchbruch festsetzen. Wenn dieser Ausfüller Löcher aufweist, kann er zum Zwecke der Belüftung dienen.

In manchen Fällen soll es möglich sein, zum Trennen der Verbindungsglieder wie folgt vorzugehen. Die Steckverbindung wird zunächst gelöst, so daß der Rollring locker im weiten Ende des ringförmigen Zwischenraums sitzt. Der Rollring ist für diesen Fall zweckmäßig so bemessen, daß er bei lockerem Sitz mit engem Kontakt an dem betreffenden Grund der Mulde anliegt, dagegen an der gegenüberliegenden Wandung des anderen Verbindungsgliedes nur sehr locker anliegt. Wenn man nun die beiden Verbindungsglieder gegeneinander dreht und gleichzeitig langsam auseinanderzieht, dann wird das Auseinanderziehen durch den Rollring nicht behindert, weil dieser durch die Drehbewegung an der glatten Wand, die den Mulden gegenüberliegt, vorbeistreicht oder gleitet. Die zu diesem Zweck gewünschte Haftung des lockeren Rollrings am Boden der betreffenden Mulde kann man noch unterstützen, indem man den Boden der Mulde, also derjenigen Mulde, in der der Rollring bei gelöster Steckverbindung ruht, aufrauht, so daß der Rollring sich beim Drehen der Verbindungsglieder nicht gegenüber der Mulde dreht sondern mit der Mulde mitdreht.

Bei dem Ausführungsbeispiel nach Figur 1 zum Beispiel, bei dem sich bei gelöster Steckverbindung der Rollring 11 in der weiteren Mulde 13 befindet, hat der Rollring in der gezeichneten Stellung Berührungskontakt mit dem Boden der Mulde 13 und leichtes Spiel gegenüber der Außenwand 5. Der Boden der Mulde 13 kann aufgerauht sein durch eine in der Zeichnung nicht sichtbare, höckerige Struktur.

Patentansprüche :

1. Steckverbindung für ineinandergesteckte Verbindungsglieder, von denen das Äußere eine kreiszylindrische Innenwand und das Innere eine kreiszylindrische Außenwand aufweist, mit einem ringförmigen Zwischenraum zwischen Innenwand und Außenwand bei koaxialer Anordnung der Verbindungsglieder und mit einem elastischen Ring, der stramm mit der Innenwand und der Außenwand verspannt in den Zwischenraum paßt und als Rollring mit kreisrundem Querschnitt ausgebildet ist, dadurch gekennzeichnet, daß die eine der Wände ( 5 ) glatt ist, daß die andere Wand ( 3 ) einen Konusabschnitt ( 4 ) aufweist, der den ringförmigen Zwischenraum ( 7 ) gegen die Richtung zur Lösung der Verbindung verjüngt, daß der Konusabschnitt ( 4 ) auf seine axiale Längeverteilt ein oder mehrere koaxiale Mulden ( 9 ) aufweist, daß der Rollring ( 11 ) locker in das weite Ende des ringförmigen Zwischenraums paßt und daß der Rollring stramm die beiden Verbindungsglieder ( 1, 2 ) verklemmend in die am engen Ende des ringförmigen Zwischenraums gelegene Mulde ( 9 ) paßt.

2. Vorrichtung nach Anspruch 1, dadurch gekennzeichnet, daß bei einem Konusabschnitt ( 44 ) mit mehreren Mulden der kleinste Radius jeder Mulde ( 46 ) kleiner ist als der einer zum weiten Ende des Konusabschnittes benachbart gelegenen Mulde ( 44 ) und größer ist als der einer zum engeren Ende gelegenen benachbarten Mulde.

3. Steckverbindung, auf deren Verbindungsglieder in axialer Richtung unterschiedliche Kräfte einwirken, nach Anspruch 1 oder 2, gekennzeichnet durch eine derartige Orientierung der Konusfläche ( 4 ), daß der Zwischenraum ( 7 ) sich in Richtung der Resultierenden ( 8 ) dieser Kräfte verjüngt.

4. Steckverbindung nach einem der vorhergehenden Ansprüche, gekennzeichnet durch die Ausgestaltung als Durchführung ( 72, 74 ).

5. Steckverbindung nach einem der Ansprüche 1 bis 3, gekennzeichnet durch die Ausgestaltung als Kupplung ( 166, 167 ).

6. Steckverbindung nach Anspruch 4 oder 5, gekennzeichnet durch die Ausgestaltung als Halterung (30 - 32 ).

7. Steckverbindung nach einem der Ansprüche 4 bis 6, gekennzeichnet durch die Ausgestaltung als Abdichtung ( 4, 9, 11 ).

8. Steckverbindung nach Anspruch 7, dadurch gekennzeichnet, daß ein Durchlaß ( 124 ) in dem mit dem Konusabschnitt ( 114 ) ausgestatteten Verbindungsglied ( 111 ) vorgesehen ist,
daß der Durchlaß im Konusabschnitt mündet und
daß die Mündung ( 125 ) bei zusammengesteckten Verbindungsgliedern ( 110, 111 ) auf der dem Auslaß ( 127 ) des Durchlasses entgegengesetzten Seite der Abdichtung ( 115, 121 ) liegt.

9. Steckverbindung nach Anspruch 7, dadurch gekennzeichnet, daß ein Durchlaß ( 104 ) in dem mit dem Konusabschnitt ( 106 ) ausgestatteten Verbindungsglied (93 ) vorgesehen ist,
daß der Durchlaß im Konusabschnitt mündet und daß die Mündung ( 106 ) bei zusammengesteckten Verbindungsgliedern ( 92, 93 ) unter dem Rollring ( 102 ) liegt und durch diesen zugesperrt ist.

10. Steckverbindung nach einem der vorhergehenden Ansprüche, dadurch gekennzeichnet,
daß das mit dem Konusabschnitt ( 135, 136 ) ausgestattete Verbindungsglied ( 134 ) am einen Ende des Konusabschnittes eine sich quer zum Zwischenraumerstreckende Stirnfläche ( 151 ) aufweist,
daß in der Stirnfläche eine koaxiale Mulde ( 152 ) angeordnet ist und
daß die koaxiale Mulde als Aufnahme zur Aufbewahrung eines Rollringes ( 139 ) ausgebildet ist.

FiG. 1

FiG. 2

0134448

Fig. 3

P54 804 - 2/14

FiG. 4

P 54 804 – 3/14

FIG. 5

0134448

FiG. 6

0134448

P54 804 - 5 / 14

FIG. 7

P 54 804 - 6/14

0134448

FIG. 8

P 54 804 — 7/14

FiG 9

FIG. 10 A

FIG. 10B

FiG. 11

0134448

FiG. 12

P54804-12/14

FIG.13

FIG. 14

P 54803 - 14/14

Europäisches
Patentamt

**EUROPÄISCHER RECHERCHENBERICHT**

Nummer der Anmeldung

EP 84107393.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁴) |
|---|---|---|---|
| A | <u>FR - A - 2 179 471</u> (R. BENZ)<br>* Seite 3; Fig. *<br>-- | 1 | F 16 B 7/02 |
| A | <u>DE - B - 2 107 308</u> (FA.R. KARST)<br>* Spalte 4, Zeile 58 - Spalte 5, Zeile 21; Fig. 1,2 *<br>-- | 1 | |
| A | <u>DD - A - 140 070</u> (R. BOLLOW et al.)<br>* Anspruch; Fig. *<br>-- | 1 | |
| A | <u>DE - A - 1 925 535</u> (AKTIEBOLAGET SVENSKA KULLAGERFABRIKEN)<br>* Seite 3, letzte Zeile - Seite 4; Fig. 2 *<br>---- | 1 | |

**RECHERCHIERTE SACHGEBIETE (Int. Cl.⁴)** 4

F 16 B

Der vorliegende Recherchenbericht wurde für alle Patentansprüche erstellt.

| Recherchenort | Abschlußdatum der Recherche | Prüfer |
|---|---|---|
| WIEN | 28-09-1984 | HOFBAUER |